# EUROPEAN PATENT SPECIFICATION

(11) **EP 2 922 918 B1**
(45) Date of publication and mention of the grant of the patent: **30.12.2020**
(21) Application number: 13799740.9
(22) Date of filing: 20.11.2013
(51) Int. Cl.: C08L 61/00

(54) **A WATERBORNE ANTICORROSION COATING COMPOSITION AND PROCESS FOR PROVIDING A CORROSION-RESISTANT COATING ON A METAL SURFACE**
WÄSSRIGE ANTIKORROSIVE BESCHICHTUNGSZUSAMMENSETZUNG UND VERFAHREN ZUR BEREITSTELLUNG EINER KORROSIONSBESTÄNDIGEN BESCHICHTUNG AUF EINER METALLOBERFLÄCHE
COMPOSITION DE REVÊTEMENT AQUEUSE ANTICORROSION ET PROCÉDÉ POUR PRODUIRE UN REVÊTEMENT RÉSISTANT À LA CORROSION SUR UNE SURFACE MÉTALLIQUE

(30) Priority: 20.11.2012 US 201261728631 P; 02.08.2013 US 201361861794 P
(43) Date of publication of application: 30.09.2015
(73) Proprietor: The Chemours Company FC, LLC, Wilmington DE 19801 (US)
(72) Inventor: HUESMANN, Peter L., Wilmington, Delaware 19803 (US)
(74) Representative: Dehns
(86) International application number: PCT/US2013/070955
(87) International publication number: WO 2014/081798

(56) References cited:
- WO-A1-2011/041527
- US-A- 5 266 611
- US-A1- 2007 190 284
- US-A1- 2009 072 199
- Dyneon THV340C technical data sheet
- PKHW-35 techincal data sheet
- Protective Coatings, Fundamentals of Chemistry and Composition, Clive Hare, Chapter 15, Epoxy Systems

## Description

### Field of the Invention

This invention relates to a process for providing a corrosion-resistant coating on a corrodible metal surface, an anticorrosion film formed by the composition, and anticorrosive articles protected by such anticorrosion film. Although of general use in coating offshore equipment, of particular note, this invention provides aqueous fluoropolymer coating compositions for fasteners, such as nuts and bolts, where the coating provides improved corrosion resistance compared to conventional coatings, while maintaining both good coating-substrate adhesion and the ability to release (coating-coating release) so that the nuts and bolts can be unscrewed, even after exposure to salt water environments. Desirably, the waterborne composition may function as a one-coat marine coating.

### Background of the Invention

Many infrastructures need anticorrosive treatment. For instance, as some steel-structured facilities such as offshore oil field drilling facilities and offshore floating docks have long-term exposure to seawater, the corrosion of such facilities are accelerated by saline matter in seawater and sun exposure. In order to extend the facilities' service life as well as to ensure security and safety, such facilities need anticorrosive treatment for their steel structures.

Polytetrafluoroethylene-based (PTFE-based) coatings have been used as anticorrosive coatings. The anticorrosive coating protects metal structures and facilities against corrosion, by seawater in most cases. However, previous polytetrafluoroethylene resin based coatings fail to meet some demanding requirements in terms of high-performance anti-corrosion and high-performance anti-erosion. The most commonly used method to measure the corrosion resistance of a coated metal substrate is the salt spray resistance test. For instance, superior anti-corrosive coatings on high-standard steel structures (such as carbon steel parts) will protect the metal from rusting for a longer period of time when undergoing the salt spray test, which equates to an extended service life and reduced maintenance costs for structures exposed to saline matter in seawater when in use. Current waterborne polytetrafluoroethylene based coatings prepared on ordinary carbon steel structures without any surface treatment can only undergo approximately 350 hrs salt spray test when the thickness of the film is 25±5 micrometer (µm, microns) in accordance with the ASTM B-117 testing condition. Thus, it is quite difficult for such coatings to meet the increasing requirements for anticorrosion performance. For example, a more typical requirement for marine coatings is to provide corrosion protection for 1,000 hours of exposure to this salt spray test on non-phosphated steel, but there are currently no commercial waterborne coatings that can attain this performance standard and the industry uses solvent-borne coatings. The marine coatings described herein can provide corrosion protection for 1,000-1,500 hours of exposure to this salt spray test on non-phosphated steel and over 2,500 hours of salt spray exposure on phosphated steel.

Furthermore, some bolts and nuts not only require high-performance anticorrosion, but also require the anti-corrosive coatings prepared on the bolts and nuts to have perfect anti-erosion and other mechanical performances so as to avoid coating erosion/flaking during fastening and loosening bolt-and-nut structures, insomuch that the anti-corrosion performance will not be impacted. Erosion/flaking most often occurs as a result of coating embrittlement following prolonged UV weathering. In other words, anticorrosive coatings for steel-structures should protect the structures both from corrosion and from erosion/flaking for a longer period of time.

United States Patent Application Publication Number 2012/0270968 A1 (to Mao) discloses a solvent-borne anticorrosion coating composition which includes an epoxy resin, a polyamideimide, and a fluoropolymer. However, no approach to obtaining low VOC waterborne coatings is presented or suggested, and, to date, such systems are still deficient with respect to corrosion resistance and adhesion to the substrate after exposure to seawater. Therefore, it is still necessary to develop a better anti-corrosive coating composition which not only has much better anti-corrosion performance but also has better anti-erosion performance. Furthermore, in many applications it is important that the anti-corrosion coating is effective even as a single coat application, which can be applied at reduced baking temperatures, such as at a temperature of no greater than 290°C.

U.S. Published Patent Application No. 2009/072199 A1 and U.S. Patent No. 5 266 611 disclose anticorrosion and primer compositions containing *inter alia* a phenoxy resin. However, there is no disclosure of a fluoropolymer in these compositions. U.S. Published Patent Application No. 2007/190284 A1 discloses a layer material for a melt-bonded layer in a multiple layer composite, the layer material comprising a fluoropolymer and *inter alia* a phenoxy resin. However, the ratio of fluoropolymer to phenoxy resin is much higher than in the present invention and the prior art invention addresses the problem of enhancing adhesion in multiple layer composites when one of the layers is a fluoropolymer layer, rather than anticorrosion properties.

### Summary of the Invention

One aspect of the invention disclosed herein provides a process for providing a corrosion-resistant coating on one or more corrodible metal surfaces.

Another aspect of the invention disclosed herein provides anticorrosion films made from a waterborne anticorrosion coating composition, which films combine good anti-corrosion performance with excellent lubricity.

Another aspect of the invention disclosed herein provides anticorrosive articles protected by the aforementioned anticorrosion films.

The invention provides a process for providing a corrosion-resistant coating on one or more corrodible metal surface, comprising:
i) forming a layer of a waterborne coating composition on said surface,said composition comprising phenoxy resin, crosslinking agent for the resin, fluoropolymer, and a liquid carrier medium;
ii) drying the layer; and
iii) heating the layer to a temperature that causes a crosslinking reaction between the phenoxy resin and the crosslinking agent, wherein the heating step is performed at no greater than 290°C, to obtain as a result thereof the corrosion-resistant coating on said metal surface;
   wherein the phenoxy resins are polyhydroxyether polymers having a weight average molecular weight, Mw, greater than 15,000, and having terminal alpha-glycol groups; and wherein the term phenoxy resin includes modified phenoxy resins,
   wherein said phenoxy resin is present in said waterborne coating composition in an amount of 40 - 60% by weight of solids based on the *total weight* of all solid components in said coating composition, and said fluoropolymer is present in said waterborne coating composition in an amount of 10 - 26% by weight of solids based on the *total weight* of all solid components in said coating composition, and
   wherein water comprises at least 70% by weight of said liquid carrier medium based on the total weight of said liquid carrier medium.

Preferably, the corrosion-resistant coating is a lubricious corrosion-resistant coating.

The phenoxy resin has a weight average molecular weight, Mw, of greater than 15,000. In another embodiment, the phenoxy resin has a weight average molecular weight, Mw, of at least 45,000.

In an embodiment, the fluoropolymer has a melting point of greater than 200°C. In another embodiment, the fluoropolymer has a melting point of greater than 300°C.

In an embodiment, the fluoropolymer has a number average molecular weight, Mn, in the range of from 20,000 to 1,110,000.

In an embodiment, the fluoropolymer has a number average molecular weight, Mn, in the range of from 20,000 to 120,000.

In an embodiment, the fluoropolymer is one of: polytetrafluoroethylene, tetrafluoroethylene-hexafluoropropylene copolymer, tetrafluoroethylene-perfluoroalkylvinylether copolymer, ethylene-tetrafluoroethylene copolymer, polyvinyl fluoride, polyvinylidene fluoride, polyhexafluoropropylene, ethylene-hexafluoropropylene copolymer, ethylene-vinyl fluoride copolymer, or any combination thereof.

In an embodiment, the crosslinking agent is a phenolic resin, an amino resin, a multifunctional melamine, an anhydride, dihydrazide, dicyandiamide, isocyanate or blocked isocyanate, or combination thereof. Preferably, the crosslinking agent is a phenolic resin or a multifunctional melamine or combination thereof.

Water comprises at least 70 wt% of the liquid carrier medium, based on the total weight of the liquid carrier medium, preferably at least 80 wt%, or even at least 85 or 90 wt%.

The phenoxy resin polymer is present in the waterborne coating composition in an amount of 40-60% by weight of solids based on the total weight of solids of all components in the coating composition, and the fluoropolymer is present in an amount of 10-26% by weight based on the total weight of solids of all components in the coating composition.

In an embodiment, the coating composition additionally comprises 0-40% by weight, such as, for example, 1-40% by weight, of an auxiliary binder consisting of one or more of polyethersulfone, polyphenylene sulfide, polyamide, polyimide, polyamideimide, polyether ether ketone, polyetherimide, polyurethane, alkyd resin, polyester, or acrylic polymers.

In an embodiment, the coating composition additionally comprises at least 10 weight % of one or more pigment, based on the total weight of solids of the coating composition.

In an embodiment, the metal surface comprises at least two metal surfaces fastened together, said metal surfaces each having said coating thereon, the lubricity of each said coating enabling said metal surfaces to be separated from one another when unfastened.

In an embodiment, the heating step is performed at a temperature below the melting point of the fluoropolymer. In an embodiment, the heating step is performed at 180-270°C.

In an embodiment, the process additionally comprises step iv) exposing the coating on the corrodible metal surface to a salt water environment.

In an embodiment, the coating is a marine coating on one or more corrodible metal surface and the coating provides salt spray resistance, having less than 10% surface rust, of at least 1,000 hours on untreated steel and at least 2,500 hours on phosphated steel when the thickness of the film is 25±5 micrometer in accordance with the ASTM B-117 testing condition.

In an embodiment, the invention provides an article having a corrodible metal surface provided with a corrosion-resistant coating on said corrodible metal surface by any of the process embodiments described herein. In one such embodiment, the article is a fastener or fastener component, such as a screw or a nut or bolt. Preferably, the corrosion-resistant coating is a lubricious corrosion-resistant coating.

Accordingly, the invention also provides a fastener system comprising metal components having corrodible metal surfaces and interposing screw threads, said corrodible metal surfaces provided with a lubricious, corrosion-resistant coating on the corrodible metal surfaces by any of the process embodiments described herein.

Further, the invention provides an anticorrosion film consisting essentially of, as a weight percent of solids based on the total weight of solids: (a) 40-60% by weight of one or more phenoxy resin; (b) one or more crosslinking agent for said phenoxy resin; (c) 10-26% by weight of one or more fluoropolymer, and (d) one or more pigment.

In one such embodiment, the fluoropolymer exists as a separate phase or as separate distinct particles within the bulk film.

In an embodiment, the crosslinking agent is a phenolic resin or a multifunctional melamine, or a combination thereof.

In an embodiment, the anticorrosion film is used as a marine coating to protect a metallic substrate from corrosion by seawater.

For each embodiment that describes an anticorrosion film, there exists an embodiment wherein the anticorrosion film is a single layer coating.

The elements of the various embodiments may be combined to provide additional embodiments of the invention.

### Detailed Description

Where a range of numerical values is recited herein, unless otherwise stated, the range is intended to include the endpoints thereof, and all integers and fractions within the range. It is not intended that the scope of the invention be limited to the specific values recited when defining a range. Moreover, all ranges set forth herein are intended to include not only the particular ranges specifically described, but also any combination of values therein, including the minimum and maximum values recited.

By "fluoropolymer" it is meant a polymer or copolymer with a backbone comprising repeat units of at least one polymerized monomer comprising at least one fluorine atom. The term "highly fluorinated" means that at least 90% of the total number of monovalent atoms attached to the polymer backbone and side chains are fluorine atoms. When the polymer is "perfluorinated", this means 100% of the total number of monovalent atoms attached to the backbone and side chains are fluorine atoms.

Herein, except when referring to quantities of solvent, "weight %" or "% by weight" means the weight percent of non-volatile component (solids) expressed as a percentage of the total weight of non-volatile components (total solids) in the composition. Unless otherwise stated, when referring to quantities of liquid carrier or co-solvent, "weight %" or "% by weight" means the weight percent of liquid carrier or co-solvent expressed as a percentage of the total weight of non-volatile and volatile components in the composition.

Herein, "low VOC" means low volatile organic content, where low means the level of VOC is below the US less exempt calculation value of 380 grams/liter or 3.20 lb/gal.

Herein, a multifunctional melamine refers to a melamine moiety having multiple groups capable of reacting with -OH groups of a phenoxy resin.

Herein, unless stated to the contrary, molecular weight refers to number average molecular weight, Mn. Molecular weights of the phenoxy polymer are reported as weight average molecular weight, Mw, as presented by the manufacturer.

Herein, melting points are measured, as known in the art, as the exothermic peak of the curve obtained by differential scanning calorimetry, DSC.

Herein, the term "auxiliary binder" refers to one or more of polyethersulfone, polyphenylene sulfide, polyamide, polyimide, polyamideimide, polyether ether ketone, polyetherimide, polyurethane, alkyd resin, polyester, or acrylic polymers.

Herein, unless otherwise stated, the term "(co)polymer" includes homopolymers and copolymers.

Herein, unless otherwise stated, the term "(meth)acrylates" includes acrylates and methacrylates and combinations thereof; and the term "(meth)acrylic acid" includes acrylic acid and methacrylic acid and combinations thereof.

Herein, the term "acrylic polymer" includes styrene-acrylic polymers, and means polymers comprising polymerized units of (meth)acrylates or (meth)acrylic acid or styrene, or combinations thereof, at a level of at least 50% by weight of solids as a percentage of the total weight of solids of the (co)polymer. The term "acrylic polymer" therefore includes both homopolymers and copolymers.

Herein, "glass transition temperature", Tg, is measured as known in the art by differential scanning calorimetry, DSC, by the half height method of the heat transition.

Herein, the term "polyamideimide" (or "PAI") also includes polyamic acid and salts of polyamic acid from which polyamideimide may be derived.

Herein the term "hard filler" refers to inorganic filler particles having a Knoop hardness of at least 1200. Knoop hardness is a scale for describing the resistance of a material to indentation or scratching. Values for the hardness of minerals and ceramics are listed in the Handbook of Chemistry, 77th Edition, pp. 12-186, 187 based on reference material from Shackelford and Alexander, CRC Materials Science and Engineering Handbook, CRC Press, Boca Raton FL, 1991. Examples of inorganic filler particles having a Knoop hardness value of 1200 or greater than 1200 are: zirconia (1200); aluminum nitride (1225); beryllia (1300); zirconium nitride (1510); zirconium boride (1560); titanium nitride (1770); tantalum carbide (1800); tungsten carbide (1880); alumina (2025); zirconium carbide (2150); titanium carbide (2470); silicon carbide (2500); aluminum boride (2500); titanium boride (2850).

The coating composition, and the anticorrosion film derived therefrom, comprises one or more fluoropolymer. The fluoropolymer mainly provides dry layers of the coating with properties including self-lubricating, non-adhesive, thermal resistant properties and low-friction coefficient.

The fluoropolymer of the invention may be a homopolymer or copolymer consisting of polymerized units of fluorinated monomers only, or of fluorinated and non-fluorinated monomers, and may include any fluoropolymer which is commonly used in coating compositions, such as, for example, polytetrafluoroethylene polymers, tetrafluoroethylene-hexafluoropropylene copolymer, tetrafluoroethylene-perfluorinated alkyl vinyl ether copolymer, ethylene-tetrafluoroethylene copolymer, polyvinyl fluoride, polyvinylidene fluoride, polyhexafluoropropylene, ethylene-hexafluoropropylene copolymer, ethylene-vinyl fluoride copolymer, or any combination thereof.

The fluoropolymers for use in this invention can be a non melt-flowable fluoropolymer with a melt viscosity of at least 1 x 10⁷ Pa•s. One embodiment is polytetrafluoroethylene (PTFE) having a melt viscosity of at least 1 x 10⁸ Pa•s at 380°C. Such PTFE can also contain a small amount of comonomer modifier which improves film-forming capability during baking (fusing), such as perfluoroolefin, notably hexafluoropropylene (HFP) or perfluoro(alkyl vinyl) ether, notably wherein the alkyl group contains 1 to 5 carbon atoms, with perfluoro(propyl vinyl ether) (PPVE) being preferred. The amount of such modifier will be insufficient to confer melt-flowability to the PTFE, generally being no more than 0.5 mole%. The PTFE, also for simplicity, can have a single melt viscosity, usually at least 1 x 10⁹ Pa•s, but a mixture of PTFEs having different melt viscosities can be used to form the fluoropolymer component.

The fluoropolymers can also be melt-flowable (also melt-fabricable) fluoropolymer, either combined (blended) with the PTFE, or in place thereof. Examples of such melt-flowable fluoropolymers include copolymers of tetrafluoroethylene (TFE) and at least one fluorinated copolymerizable monomer (comonomer) present in the polymer in sufficient amount to reduce the melting point of the copolymer substantially below that of TFE homopolymer, polytetrafluoroethylene (PTFE), e.g., to a melting temperature no greater than 315°C. Preferred comonomers with TFE include the perfluorinated monomers such as perfluoroolefins having 3-6 carbon atoms and perfluoro(alkyl vinyl ethers) (PAVE) wherein the alkyl group contains 1-5 carbon atoms, especially 1-3 carbon atoms. Especially preferred comonomers include hexafluoropropylene (HFP), perfluoro(ethyl vinyl ether) (PEVE), perfluoro(propyl vinyl ether) (PPVE) and perfluoro(methyl vinyl ether) (PMVE). Preferred TFE copolymers include FEP (TFE/HFP copolymer), PFA (TFE/PAVE copolymer), TFE/HFP/PAVE wherein PAVE is PEVE and/or PPVE, and MFA (TFE/PMVE/PAVE wherein the alkyl group of PAVE has at least two carbon atoms). Typically, the melt viscosity will be at least 1 x 10² Pa•s and may range up to about 60-100 x 10³ Pa•s as determined at 372°C according to ASTM D-1238. The melt flow rate may range from ∼0.5 to ∼550 g/10min.

In an embodiment, the fluoropolymer component is a blend of non melt-fabricable fluoropolymer with a melt viscosity in the range from 1 x 10⁷ to 1 x 10¹¹ Pa•s and melt fabricable fluoropolymer with a viscosity in the range from 1 x 10³ to 1 x 10⁵ Pa•s.

The fluoropolymer component is generally commercially available, either as a powder, or as a dispersion of the polymer in water. By "dispersion" is meant that the fluoropolymer particles are stably dispersed in the aqueous medium, so that settling of the particles does not occur within the time when the dispersion will be used. This may be achieved by utilizing a small size of fluoropolymer particles, typically less than 0.5 micrometers, and the use of surfactant in the aqueous dispersion by the dispersion manufacturer. Such dispersions can be obtained directly by the process known as dispersion polymerization, optionally followed by concentration and/or further addition of surfactant. Powder particle sizes are typically 1-50 micrometers.

Useful fluoropolymers also include those commonly known as PTFE micropowders. These polymers are melt flowable, having a melt flow rate of 0.05-500 g/10 mins, more commonly 0.5-100 g/10 mins. These fluoropolymers generally have a melt viscosity 1x 10² Pa•s to 1 x 10⁶ Pa•s at 372°C. Such polymers include but are not limited to those based on the group of polymers known as tetrafluoroethylene (TFE) polymers. The polymers may be directly polymerized or made by degradation of higher molecular weight PTFE resins. TFE polymers include homopolymers of TFE (PTFE) and copolymers of TFE with such small concentrations of copolymerizable modifying comonomers (<1.0 mole percent) that the resins remain non-melt-processible (modified PTFE). The modifying monomer can be, for example, hexafluoropropylene (HFP), perfluoro(propyl vinyl) ether (PPVE), perfluorobutyl ethylene, chlorotrifluoroethylene, or other monomer that introduces side groups into the molecule.

The fluoropolymer component may, for example, be a mixture of polytetrafluoroethylene and ethylene-tetrafluoroethylene copolymer; or a mixture of polytetrafluoroethylene and tetrafluoroethylene-hexafluoropropylene copolymer; or a mixture of polytetrafluoroethylene and tetrafluoroethylene-perfluorinated alkyl vinyl ether copolymer; or a mixture of tetrafluoroethylene-hexafluoropropylene copolymer and ethylene-tetrafluoroethylene copolymer; or a mixture of polytetrafluoroethylene and polyvinyl fluoride; or a mixture of tetrafluoroethylene-hexafluoropropylene copolymer and polyvinyl fluoride; or a mixture of tetrafluoroethylene-perfluorinated alkyl vinyl ether copolymer and ethylene-tetrafluoroethylene copolymer; or a mixture of tetrafluoroethylene-perfluorinated alkyl vinyl ether copolymer and polyvinyl fluoride.

Fluoropolymers comprising polymerized units of fluorohydrocarbon monomers, such as polyvinylfluoride and polyvinylidenefluoride, or comprising polymerized units of perfluorinated monomers together with monomers that are not perfluorinated, such as polyethylene-tetrafluoroethylene copolymer, may also find utility in the aqueous coating compositions. However, perfluorinated fluoropolymers, or a mixture of two or more perfluorinated polymers, are preferred. A particularly suitable fluoropolymer is polytetrafluoroethylene (PTFE), or a mixture of two or more polytetrafluoroethylene (PTFE) polymers.

In an embodiment, the one or more fluoropolymer comprises one or more perfluorinated polymer. In one such embodiment, the perfluorinated polymer is polytetrafluoroethylene (PTFE).

In another embodiment, the one or more fluoropolymer comprises only perfluorinated polymers. In one such embodiment, the one or more fluoropolymer comprises only polytetrafluoroethylene (PTFE), or only PTFE micropowder. In one such embodiment, the one or more fluoropolymer comprises a mixture of two or more polytetrafluoroethylene (PTFE) polymers.

In another embodiment, the one or more fluoropolymer comprises a mixture of two or more perfluorinated polymers. In one embodiment of this type, two of the two or more perfluorinated polymers differ in particle size. In one embodiment of this type, two of the two or more perfluorinated polymers differ in particle size by a factor of from 5 to 20. In another embodiment of this type, two of the two or more perfluorinated polymers differ in melt viscosity. In an embodiment, two of the two or more perfluorinated polymers differ in melt viscosity by a factor of from 5 to 10⁷ Pa.s.; or differ by a factor of from 5 to 200; or differ by a factor of from 10 to 100.

In an embodiment, the anticorrosion coating composition, and the anticorrosion film derived therefrom, comprises a fluoropolymer having a number average molecular weight of 20,000-1,110,000; in an embodiment, the fluoropolymer has a molecular weight of 60,000-700,000; in an embodiment, the fluoropolymer has a molecular weight of 90,000-500,000; in an embodiment, the fluoropolymer has a molecular weight of 20,000-250,000; in an embodiment, the fluoropolymer has a molecular weight of 20,000-120,000; in an embodiment, the fluoropolymer has a molecular weight of 20,000-100,000.

In an embodiment, the fluoropolymer has a melt flow rate of 1.0-50g/10min; in an embodiment, the fluoropolymer has a melt flow rate of 2.3-45g/10min; in an embodiment, the fluoropolymer has a melt flow rate of 5-25g/10min.

In an embodiment, the fluoropolymer has a melting point of greater than 200°C. In another embodiment, the fluoropolymer has a melting point of greater than 240°C, or greater than 300°C, or even greater than 320°C.

In an embodiment, the fluoropolymer powder has an average particle diameter of 3-30 micrometer; in an embodiment, the fluoropolymer powder has an average particle diameter of 3-15 micrometer, preferably 3-10 micrometer; in another embodiment, the fluoropolymer has an average particle diameter of 15-30 micrometer.

The fluoropolymer used in the invention may be purchased in the markets. For example, it may be purchased from DuPont Company (Wilmington, DE, USA) in the trade names of either Teflon® or Zonyl®.

In an embodiment, in the case that the fluoropolymer used in the invention comprises polytetrafluoroethylene micropowder, the melt flow rate of the polytetrafluoroethylene micropowder may be 2.3-45g/10min, and its average particle diameter dso may be 3 - 12 micrometer.

The coating composition comprises 10-26% by weight of fluoropolymer, or, in an embodiment it may comprise 19-26% by weight of fluoropolymer, based on the total weight of non-volatile components (total solids) in the composition.

The anticorrosion film comprises 10-26% by weight of fluoropolymer, or, in an embodiment it may comprise 19-26% by weight of fluoropolymer, based on the total weight of non-volatile components (total solids) in the composition.

The anticorrosion coating composition, and the anticorrosion film derived therefrom, comprises at least one binder polymer and at least one cross-linker, which latter may or may not be polymeric.

The composition comprises at least one waterborne phenoxy resin, which functions as a binder polymer. Phenoxy resins are polyhydroxyether polymers (essentially linear polyethers having pendant hydroxyl groups) having terminal alpha-glycol groups. They are very high molecular weight resins (Mn > 15,000) with minimal oxirane functionality; epoxy groups are present only at the extreme end of the polymer chain. Herein, the term phenoxy resin includes modified phenoxy resins (anionically stabilized waterborne dispersions of phenoxy resin may be generated by modification of the phenoxy resin backbone by grafting onto the aliphatic carbon segments). Most commercial phenoxy resins are high molecular weight reaction products of Bisphenol A and epichlorohydrin.

The phenoxy polymer has a weight average molecular weight, Mw, of greater than 15,000, and preferably greater than 25,000, or greater than 35,000, or greater than 45,000. For example, Mw for the phenoxy resin may range from 15,000 to 200,000, such as from 25,000 to 100,000, and preferably from 40,000 to 80,000. In an embodiment, Mw for the phenoxy resin may range from 45,000 to 60,000.

The waterborne phenoxy resin can be purchased from the markets. For instance, waterborne phenoxy resin dispersions can be purchased from the InChem Corporation, Rock Hill, South Carolina (USA), for example, the InChem Rez™ resin product series, including InChem Rez™ PKHW-34 and PKHW-35.

The phenoxy polymer is present in the composition in an amount of 40-60% by weight of solids of the phenoxy polymer, as a percentage based on the total weight of solids of all components in the coating composition. Based on the total weight of solids of all components in the coating composition, the amount of phenoxy polymer in the coating composition may range from as low as 40% by weight of solids, up to as high as 60%, or up to 50% by weight of solids.

The anticorrosion coating composition also comprises at least one cross-linker. In addition to providing superior corrosion resistance, the cross-linker additionally confers resistance to caustic aqueous organic solvent products used as rig wash media, as described in the Examples. Cross-linkers known in the art may be suitable, such as, for example, polymeric cross-linkers like phenolic resins, polyisocyanates and polyurethanes comprising isocyanates, as well as amino resins (or "aminoplast resins"). Amino resins are synthesized through the condensation of formaldehyde with an amine bearing moiety and include melamine formaldehyde resins, urea formaldehyde resins, and other analogous resins with amine-bearing materials such as benzoguanamine, acetoguanamine, glycoluril, thiourea, aniline, and paratoluene sulfonamide. Alternatively, small molecule cross-linkers may be used, such as multifunctional melamines, isocyanates, blocked isocyanates, anhydrides, dihydrazides, triazines, dicyandiamide, and the like. Preferably, the crosslinking agent is a phenolic resin, amino resin or a multifunctional melamine, or dicyandiamide, or combination thereof. Melamine or melamine derivatives are preferred cross-linkers, for example Hexakis-(Methoxy Methyl) Melamine (HMMM) is a preferred cross-linker. Preferably, the cross-linker is water soluble or water dispersible. Full curing and cross-linking of the binder polymer requires a heat-treatment of the applied coating composition film.

The cross-linkers can be purchased from the markets. For example, phenolic resins can be purchased from Georgia Pacific (Atlanta, Georgia, USA), such as serial number GPRI-4003; melamine can be purchased from BASF Corporation (Ludwigshafen, Germany), as a small molecule, for example, Luwipal™ 66, or as a polymeric resin, such as Luwipal™ 018BX.

The amount of cross-linker to be added is dependent on the specific phenoxy resin selected as binder polymer and on the specific cross-linker chosen, since it is a function of the number of reactive sites on the phenoxy resin for a given mass of resin solids, and also the number of reactive functional sites on the cross-linker for a given mass of cross-linker. The reactive sites of the phenoxy resin are -OH groups present along the polymer chain of the phenoxy resin. Practitioners in the art are practiced in calculating the "equivalents" of cross-linker that may react, and use this as a starting point to determine the optimized quantity of cross-linker to add. (See, for example, "Protective Coatings", C. H. Hare, Technology Publishing Company, Pittsburgh, PA, USA; 1994; pp.33-35).

As an example, based on the total weight of solids of all components in the coating composition, the amount of melamine cross-linker in the coating composition may range from as low as 1%, or from 2%, or from as low as 3%, or from 4% by weight of solids, up to as high as 10% or up to 8%, or up to as high as 6%, or up to 4%, or up to 3% by weight of solids. It has been found that suitable amounts of melamine may be from 2-8%, preferably 3-7% by weight of solids of the melamine based on the total weight of solids of all components in the coating composition. The levels may be adjusted downward accordingly in the event that a mixed cross-linking system is used, i.e. if the melamine is one of two or more different cross-linking species that are added.

Compared to melamine and other small molecule cross-linkers, phenolic resins (and other polymeric cross-linkers) typically have fewer reactive functional groups available for cross-linking for a given mass of the cross-linking species. Accordingly, if selected as the cross-linking species, polymeric cross-linkers are generally required to be added in larger quantities by weight of solids in order to confer similar properties. As an example, based on the total weight of solids of all components in the coating composition, the amount of phenolic resin cross-linker in the coating composition may range from as low as 5%, or from 8%, or from as low as 10%, or from 15% by weight of solids, up to as high as 10% or up to 15%, or up to as high as 20%, or up to 25% by weight of solids. It has been found that suitable amounts of phenolic resin may be from 5-20%, preferably 10-15% by weight of solids of the phenolic resin based on the total weight of solids of all components in the coating composition. The levels may be adjusted downward accordingly in the event that a mixed cross-linking system is used, i.e. if the phenolic resin is one of two or more different cross-linking species that are added.

In an embodiment, the anticorrosion coating composition comprises both a small molecule cross-linker and a polymeric cross-linker. In a preferred embodiment, the anticorrosion coating composition comprises both a melamine, such as HMMM, as a small molecule cross-linker and a phenolic resin as a polymeric cross-linker. In a preferred embodiment, the anticorrosion coating composition comprises melamine in an amount of from 2-5% by weight of solids of the melamine based on the total weight of solids of all components in the coating composition, and a phenolic resin in an amount of from 10-15% by weight of solids of the phenolic resin based on the total weight of solids of all components in the coating composition.

The anticorrosion coating composition, and the anticorrosion film derived therefrom, optionally may also comprise a second binder polymer, referred to herein as an auxiliary binder polymer or an auxiliary binder. The auxiliary binder may be one or more of the following: polyethersulfone, polyphenylene sulfide, polyether ether ketone, polyetherimide, polyimide, polyamide, polyamideimide, polyurethane, alkyd resin, polyester, or acrylic polymers.

In an embodiment, the auxiliary binder comprises an acrylic polymer, which acrylic polymer comprises polymerized units of one or more (meth)acrylic acid, or one or more C₁₋₈ alkyl(meth)acrylate, or a combination thereof. In one such embodiment, the acrylic polymer comprises polymerized units of a phosphorus-containing monomer, such as phosphoethyl (meth)acrylate.

In an embodiment, the glass transition temperature, Tg, (ASTM E-1356) of the auxiliary binder is in the range of 200-240°C; or, 210-230°C.

In an embodiment, the auxiliary binder is polyethersulfone or a mixture of polyethersulfone and any of the above component(s). Alternatively, the auxiliary binder may be polyphenylene sulfide, or a mixture of polyphenylene sulfide and any of the above component(s).

Polyethersulfone can be purchased from the markets. For example, it can be purchased in the trade names of Radel™ A-304P or Radel™ A-704P from Solvay Advanced Polymers L.L.C (Dusseldorf, Germany); alternatively, polyethersulfone powders can also be purchased in the trade name of PES 4100mp from Sumitomo Chemical Co., Ltd. (Tokyo, Japan). Polyphenylene sulfide is available as the resin Ryton™ V-1 (Conoco-Phillips, Houston, TX, USA). Acrylic polymers are available, for example, under the tradenames Maincote™, Rhoplex™ and Avanse™ (for example, Maincote™ HG-54, Rhoplex™ WL-71; Avanse™ MV-100) from Dow Chemical Company (Midland, Michigan, USA). Alkyd resins or solutions, for example, under the tradenames Beckosol™, Amberlac™ and Kelsol™, (such as, for example, Beckosol™ 1271) as well as urethanes, for example, under the tradename Urotuf™, (such as Urotuf™ L-60-45) are available from Reichhold (Research Triangle Park, NC, USA). Some resins may need to be redispersed in water.

Based on the weight of solids of all components in the anticorrosion coating composition, the composition may comprise 0-40% by weight of one or more auxiliary binder, for example, in an embodiment, 1-40%, or 5-38% by weight, or 15-35% by weight, or 19-34%, or 1-10%, by weight of auxiliary binder, based on the total weight of non-volatile components (total solids) in the composition.

Based on the weight of solids of all components in the anticorrosion film, the anticorrosion film may comprise 0-40% by weight of one or more auxiliary binder, for example, in an embodiment, 1-40%, or 5-38% by weight, or 15-35% by weight, or 19-34%, or 1-10%, by weight of auxiliary binder, based on the total weight of non-volatile components (total solids) in the composition.

Preferably, the weight % of auxiliary binder, if any, is less than the combined weight % of phenoxy resin and cross-linker(s).

Preferably, the anticorrosion coating composition, and the anticorrosion film derived therefrom, does not comprise any polyamideimide or polyamic acid or salt thereof, or any elastomeric component, such as silicone.

The anticorrosion coating composition also comprises a liquid carrier system in order to provide the components in a dispersed form, consisting of water and emulsifier, or water and dispersing agent, or a mixture of water and one or more non-aqueous co-solvents.

Non-limiting examples of water miscible co-solvents that may be suitable are given as follows: one or several C₁₋₄ alkyl substituted pyrrolidones (such as N,N-dimethyl-pyrrolidone, N-methyl-2-pyrrolidone, or a mixture of the two); esters (such as γ-butyrolactone, n-butyl acetate, or a mixture of the two); ethers (ethylene glycol monoethyl ether, ethylene glycol monobutyl ether, diethylene glycol monobutyl ether, or a mixture of any two or more than two of the above ethers); alcohols (such as furanol, isobutyl alcohol, n-propanol, or a mixture of any two or more than two of the above alcohols); acids (such as ethanoic acid, propionic acid or a mixture of the two acids); halohydrocarbon (such as chloroform, 1,2-dichloroethane, or a mixture of the two); or a mixture of any two or more than two solvents above. The choice of co-solvents may be influenced by the effectiveness of a chosen solvent to be used within the confines of the low VOC formulation.

As long as the water and any co-solvent can dissolve or disperse all components of fluoropolymer, all binder components, and all components of other additives, it should be suitable for applying the coating composition, there being no special limitation with regard to the amount of the co-solvent used in the anticorrosion coating composition, except that co-solvents should not comprise 30% or more, by weight, of the total weight of the liquid carrier components. The liquid carrier comprises water in an amount of at least 70%, by weight, of the total weight of the liquid carrier components, and preferably at least 80%, or 85%, or even or at least 90 or 95% by weight, of the total weight of the liquid carrier components.

The liquid carrier system (including water, or a mixture of water and the aforementioned non-aqueous co-solvents) contained in the anticorrosion coating composition can be selected from or partially selected from the water and co-solvents contained in dissolved or dispersed substances and/or from additional co-solvents used in formulating the coating composition.

In an embodiment, the fluoropolymer, waterborne phenoxy resin dispersion, cross-linkers, any auxiliary binder dispersion, and pigment(s) are used in formulating the anticorrosion coating composition. In the event that the total amount of water and co-solvents in the above dispersions and solutions are sufficient to dissolve or disperse all components of the anticorrosion coating composition, then no additional solvent or co-solvent is needed in the formulation.

In an embodiment, on the basis of the composition's dry weight being 100 % by weight, the composition comprises 100-400% by weight of the one or more liquid carrier, such as, for example, in an embodiment, 130-350% by weight of liquid carrier, or 180-300% by weight of liquid carrier.

The anticorrosion coating composition preferably comprises one or more coloring agent, pigment and/or dyestuff. These may include a range of conventional inorganic or organic coloring agents, pigments and/or dyestuff known in the field. After reading the contents disclosed herein, ordinary technicians working in the field may easily identify suitable coloring agents, pigments and/or dyestuff in accordance with specific requirements.

The aqueous coating composition may comprise either one or more inorganic filler, or one or more inorganic pigment, or a combination thereof. The inorganic filler and pigment particles are one or more filler or pigment type materials which are inert with respect to the other components of the composition and thermally stable at its cure temperature. The filler is insoluble in water and co-solvents so that it is typically uniformly dispersible but not dissolved in the liquid carrier of the composition of the invention.

Suitable fillers and pigments as known in the art may be utilized including particles of calcium carbonate, aluminum oxide, calcined aluminum oxide, silicon carbide etc. as well as glass flake, glass bead, glass fiber, aluminum or zirconium silicate, mica, metal flake, metal fiber, fine ceramic powders, silicon dioxide, barium sulfate, talc, etc. Preferred fillers/pigments include titanium dioxide and metal phosphates and mixed metal phosphates such as zinc phosphate, zinc aluminum phosphate and calcium zinc phosphate. Surface pre-treated pigments as known in the art are commonly available from manufacturers and generally these are also suitable. The levels of fillers and pigments is not particularly limited although high levels, for example, a level in combination of greater than 50% by weight of total solids, are usually unsuitable for corrosion resistant coatings. Preferably the combined weight percent of pigments and fillers, as a percentage of the total weight of solids in the composition, is less than 30%, and more preferably less than 25%; In an embodiment, it is between 10% and 25%. Preferably, the pigment is present at a level of from 10% to 25%. In an embodiment, organic or inorganic liquid colorants may be used in addition to, or in place of, solid pigments. Color acceptance is an important property for marine fasteners, since many manufacturers require the marine fastener coatings to be blue for some applications, or to be red in some other applications. A preferred pigment is Blue Phthalocyanine or a combination of Blue Phthalocyanine and titanium dioxide for the blue marine coatings, or red iron oxide for the red marine coatings. The inventive compositions described herein show good color acceptance. In another embodiment the coating composition does not include either solid pigments or colorants.

No special limitation applies to the amount of the coloring agents, pigments and/or dyes which may be added to the anticorrosion coating composition, as long as the final coating formed by the composition can be properly colored and the ultimate coating film is not adversely affected in terms of its anticorrosion property. In an embodiment, based on the total weight (dry weight) of the anticorrosion coating composition, the composition, and the anticorrosion film derived therefrom, may comprise 0-30% by weight of the coloring agents, pigments and/or dyes, such as, for example, in an embodiment, 1-30% by weight of coloring agents, pigments and/or dyes, or 10-30% by weight of coloring agents, pigments and/or dyes.

In order to further enhance the hardness and anti-wear property of the fluorinated coatings, the anticorrosion coating composition may also contain a range of hard filler particles. Usually, the average diameter of the filler particles is 1-100 micrometer, such as, for example, in an embodiment, 5-50 micrometer, or 5-25 micrometer for hard filler particles. Non-limiting examples of hard filler particles are given as follows: aluminum oxide, silicon carbide, zirconium oxide and scrap metal such as aluminum scrap, zinc scrap and silver scrap. No special limitation applies to the amount of hard fillers which may be added to the anticorrosion coating composition, as long as the final coating properties are not adversely impacted. In an embodiment, based on the total weight (dry weight) of the anticorrosion coating composition, the composition, and the anticorrosion film derived therefrom, comprises 0-4% by weight of hard fillers, such as, for example, 0.5-2.5% by weight of hard fillers, or 0.8-1.2% by weight of hard fillers.

In an embodiment, the hard filler is a particulate filler having an average particle size of 1-100 microns and is selected from the group consisting of alumina, silicon carbide, zirconia and sheet-metal. Silicon carbide is the most preferred hard filler.

Additionally, the anticorrosion coating composition may also contain other conventional coating additive products, such as, for example, surface-active agent, defoaming agent, wetting agent, rust inhibitor, flash rust inhibitor, flame retardant, ultraviolet stabilizer, weather-proof agent, leveling agent, biocide, mildewcide, etc.

Methods of formulating such compositions are well known in the art. Although coalescents may be used, they are not required because the high temperatures used in drying and curing the composition may also be sufficient to achieve appropriate film formation for the main polymeric binder. The formulation ingredients may be combined using mechanical stirrers as known in the art, and addition of pigments and fillers may be more effectively accomplished using known high speed and/or high shear techniques using high shear stirrers such as, for example, a Cowles mixer.

The compositions of the present invention can be applied to substrates by conventional means. Spray applications are the most convenient application methods. Other well-known coating methods including dipping, brushing and coil coating are also suitable.

The substrate is preferably a metal for which corrosion resistance of the coated substrate is increased by the application of the inventive coating composition. Examples of useful substrates include aluminum, anodized aluminum, carbon steel, and stainless steel. As noted above, the invention has particular applicability to steel, such as cold rolled steel, and particularly for steel fasteners. Preferably, the substrate is pre-treated by methods which withstand the cure temperature of the coating, such as, for example, phosphate, zinc phosphate, or manganese phosphate treatments, and others as known in the art.

Prior to applying the coating composition, the substrate is preferably cleaned to remove contaminants and grease which might interfere with adhesion. Conventional soaps and cleansers can be used for cleaning. Optionally, the substrate can be further cleaned by baking at high temperatures in air, at temperatures of 800 deg F (427°C) or greater. Preferably, the substrate is then grit-blasted; for example, preferably resulting in a surface roughness of 1-4 micrometers, or 3-4 micrometers. The cleaning and/or grit-blasting steps enable the coating to better adhere to the substrate.

In a preferred embodiment the coating is applied by spraying. The coating is applied to a dried film thickness (DFT) of greater than about 10 micrometers, preferably greater than about 12 micrometers and in other embodiments in ranges of about 10 to about 30 micrometers; and, preferably, about 18 to about 28 micrometers. The coating composition may be used as a single coat. However, the thickness of the coating affects the corrosion resistance. If the coating is too thin, the substrate will not be fully covered resulting in reduced corrosion resistance. If the coating is too thick, the coating will crack or form bubbles resulting in areas that will allow salt ion attack and therefore reduce corrosion resistance. (In order to standardize testing protocols, coatings applied on a substrate for the salt spray corrosion resistance test should be 25 +/- 3 micrometers). The aqueous composition is applied and then dried to form the coating. Drying and curing temperature will vary based on the composition, for example, from 100°C to 290°C, or from 110°C to 270°C, but for example may be typically a drying temperature of 120°C for 15 minutes followed by cure at 230°C for 25 minutes. Further coating layers may be applied, although this invokes additional heat/cure cycles; each coating layer may be dried at 120°C for 15 minutes, and the substrate allowed to cool between coating applications, prior to final cure, which may be the same as that for the one-coat cure (230°C for 25 minutes). Heating to final cure either completes or causes the crosslinking reaction between the phenoxy resin and the crosslinking agent(s).

The anticorrosion coating composition is suitable for protecting a variety of metal or non-metal substrates from a range of corrosive liquids or gas such as seawater and acid fog. Non-limiting examples of the substrates include, for example, carbon steel (such as nuts, bolts, valves, pipes, pressure control valves, oil-drilling platforms and docks made from steel), stainless steel, aluminum, etc. The composition is particularly useful for fasteners, such as nuts and bolts, used in marine environments.

The invention also provides an article comprising: a substrate; and an anticorrosion film disposed on the substrate, wherein the anticorrosion film results from application of any one of the aforementioned anticorrosion coating compositions.

In an embodiment, the substrate is made of steel. In an embodiment, the substrate is a steel fastener, such as a nut or bolt.

The invention also provides a method of forming an anticorrosive film on a substrate, including the steps of applying the aforementioned anticorrosion coating composition on the substrate and heating from 100°C to 290°C, or from 100°C to 270°C, or from 200°C to 250°C, to effect cure of the coating. No special limitation applies to the methods of applying the composition to a substrate. Known methods may be suitable, including, but not limited to: brush coating, spray coating, dip-coating, roll coating, spin coating, curtain coating, or a combination thereof.

The invention provides a true water-based low VOC one coat product for protection of metal substrates in corrosive environments. It can be applied to a variety of metal substrates including aluminum, Stainless Steel (with grit blast preparation) and cold rolled steel (CRS) with a protective pretreatment (preferably phosphated) for the best results.

Conventional spray equipment can be used for application of the coating and only water is required for clean-up of the equipment. The preferred bake for the coating is a flash dry at up to 150° C followed by a final bake at 232°C to 288°C (450 to 550 deg F), more preferably 232°C to 260°C (450 to 500 deg F) for 15 to 20 minutes metal temperature. The preferred upper limit to the cure temperature recognizes that the treated surface of some phosphate-treated steel may suffer from degradation at higher temperatures, which may start at temperatures in the region of ∼260°C (500 deg F).

The anticorrosion coating composition and the article coated with the composition will be further elaborated in the examples, which are intended to be illustrative, but not limiting.

### Examples and Test Methods

In order to function as a marine coating, and specifically as a marine coating on a fastener, the applied coating must possess a challenging balance of properties including: corrosion resistance (salt spray corrosion resistance test), oil resistance (resistance to typical hydraulic fluids), solvent resistance (exposure to aqueous solvent mixtures used as a rig wash), SO₂ resistance (Kesternich test), weathering resistance (UV exposure test), and good lubricity (coefficient of friction and ability of fasteners to unfasten readily by hand). No current commercial products are considered to possess the full balance of properties.

The primary unmet need is sufficient resistance to corrosion in marine environments. Current waterborne fluoropolymer based coatings prepared on ordinary carbon steel structures without any surface treatment can only undergo approximately 350 hrs in the salt spray test when the thickness of the film is 25±5 micrometer in accordance with the ASTM B-117 testing condition. The primary goal of the current work is to provide a waterborne lubricious coating that provides corrosion resistance to ordinary carbon steel structures without any surface treatment of at least 500 hours in the salt spray test (in accordance with the ASTM B-117 testing condition). For surface treated steel (for example, phosphated steel), the primary goal for this work is protection to 1,000 hours in the salt spray test.

For the more demanding applications, a more challenging target for marine coatings is to provide corrosion protection for 1,000 hours of exposure to this salt spray test on non-phosphated steel, and 2,500 hours of exposure for phosphated steel. To date, there are no commercial waterborne coatings that can attain this performance standard and the industry uses solvent-borne coatings.

### Sample Preparation

Metal panels coated with the coating compositions are prepared as follows:
In order to make well-adhered and zero-defect coatings, the substrate must be clean, oil-free and without any incrustation of dirt. Therefore, oil and dirt on the surface is cleaned by grit blasting (to a surface roughness of 3∼4µm). Carbon steel or aluminum plate is coated with the anti-corrosion coating composition, and is dried for 15-20 minutes at 115-130°C. Then, it is further cured for 25 minutes at 230°C resulting in a 25 ± 3 micrometer thickness anti-corrosion coating on the carbon-steel or aluminum plate. (The dried coating thickness, DFT, of the applied coating is measured with a film thickness instrument, e.g., Isoscope, based on the eddy-current principle, ASTM B244). Coated steel fasteners can be prepared similarly.

### 1. Corrosion Resistance Test

1-1. Salt Spray: The salt spray test follows ASTM B-117 Standard. The coated samples (prepared as described above) are horizontally placed in a salt mist box (the "Q-FOG", Q-Panel Laboratory Products, 26200 First Street, Cleveland, OH, USA) at a constant temperature of 35 ± 1.1°C. 5% sodium chloride solution is sprayed into the box (at a rate of 80cm² per hour) until 1.0-2.0ml sodium chloride solution is concentrated on the sample. The degree of corrosion on the anti-corrosion coating can be judged by the amount of blistering or rust spots on the coatings. If the rust-stained area accounts for over 10%, the test is stopped and the time recorded for the test is treated as the result of the salt spray corrosion test. The test proceeds for up to 2,500 hours, after which time if the rust spot or blistering account for less than 10% of the coating surface the test is stopped and the result of the salt spray corrosion test is taken to be >2,500 hours.

### 2. Solvent Resistance (Rig Wash) Test

Test: Exposure to a typical rig wash product in the form of a 1:5 mixture of "Rig Wash" to water for 24 hours at 70°C. After removal from the test medium, rinsing with water, and then drying, the samples are checked for blistering or softening of the coating.

### 3. Kesternich Test (Acid Rain)

The Kesternich Test is a standard test used in the industry to simulate the detrimental effects of acid rain. The test involves dissolving sulfur dioxide in distilled water, creating sulfuric acid. The chamber is heated for 8 hours at 100% relative humidity. After the 8 hours, the chamber vents the excess sulfur dioxide and returns to room temperature. This cycle is repeated every day for 30 cycles.

### Abbreviations

Phenoxy Resin - InChem Rez™ PKHW-35, 32% Solids, Mw ∼ 50,000 (InChem Corporation, Rock Hill, South Carolina, USA).
Phenolic Resin - GPRI-4003, 48% Solids (Georgia Pacific, Atlanta, Georgia, USA).
Melamine or HMMM - Hexakis-(Methoxy Methyl) Melamine (Luwipal 066), BASF Corporation (Ludwigshafen, Germany).
PTFE Micropowder - PolyMist F5A, particle size ∼ 4 microns, melting point ∼ 325°C (Solvay International Chemical Group, Brussels, Belgium).
PTFE TE-3950 - TE-3950, average dispersion particle size ∼ 0.2 microns, melting point ∼ 325°C (DuPont, Wilmington, Delaware, USA).
PTFE TE-3952 - TE-3952, average dispersion particle size ∼ 0.2 microns, melting point ∼ 327°C (DuPont, Wilmington, Delaware, USA).
PTFE TE-5070AN - TE-5070AN, average dispersion particle size ∼ 0.1 microns, melting point ∼ 325°C (DuPont, Wilmington, Delaware, USA).
FEP Powder - Spray Dried TE-9071 dispersion; average particle size ∼ 24 microns, melting point ∼ 228°C (DuPont, Wilmington, Delaware, USA).
FEP Dispersion TE-9827 - average dispersion particle size ∼ 0.2 microns, melting point ∼ 260°C (DuPont, Wilmington, Delaware, USA).
Epoxy Resin EPI-REZ 3540-WY-55 - Water-based bisphenol A epoxy resin (EPON 1007) with organic solvent (Momentive Specialty Chemicals, Columbus, OH, USA).
Epoxy Resin EPI-REZ 3546-WH-53 - Water-based bisphenol A epoxy resin (EPON 1007) with cosolvent (Momentive Specialty Chemicals, Columbus, OH, USA).
Epoxy Resin EPI-REZ 6006-W-68 - Water-based epoxidized o-cresylic novolac resin with an average functionality of 6 (Momentive Specialty Chemicals, Columbus, OH, USA).
Epoxy Resin EPI-REZ 6520-WH-53 - Water-based bisphenol A epoxy resin (EPON 1001) with cosolvent (Momentive Specialty Chemicals, Columbus, OH, USA).
Red Pigment: Red Iron Oxide - Ferroxide Red 212P.
Blue Pigment: Phthalocyanine Blue - Lionol Blue.
White Pigment: Titanium Dioxide - TiPure™ R-900 (DuPont, Wilmington, Delaware, USA).
Black Pigment: Carbon Black - Channel Black Aqueous Dispersion.
Dispersant - Tamol SN Dispersing Agent (Dow Chemical, Midland, MI, USA).
Surfactant - Tergitol™ TMN-6, non-ionic surfactant, 90% aqueous (Dow Chemical, Midland, MI, USA).
COF - Coefficient of Friction.
CRS - Cold Rolled Steel.

Industry standards dictate that certain marine coatings are color coded, with two important coatings being a red marine coating and a blue marine coating, each of which has its own set of industry-driven performance requirements. In order to more easily formulate and ensure good homogeneous mixing of the solid color pigments, three color mill bases were prepared, which may then be formulated by cold blending with the resin and formulation ingredients.

These mill bases were prepared by simple mixing in the order shown below followed by passing through a horizontal media mill containing 1mm glass beads. The Red (iron oxide), Blue (Phthalocyanine Blue) and White (titanium dioxide) Mill bases that were prepared are shown in Tables 1-3 (wet weight additions).

**TABLE 1. Red Iron Oxide Mill Base**

| **Ingredient** | **Wt%** |
|---|---|
| PHENOXY RESIN, PKHW-35, 32% Solids | 51.81 |
| WATER | 10.84 |
| TAMOL SN DISPERSING AGENT | 0.65 |
| FERROXIDE RED 212 P | 36.70 |
| | 100.0 0 |

**TABLE 2. Phthalocyanine Blue Mill Base**

| **Ingredient** | **Wt%** |
|---|---|
| PHENOXY RESIN, PKHW-35, 32% Solids | 68.77 |
| WATER | 14.39 |
| TAMOL SN DISPERSING AGENT | 0.87 |
| LIONOL BLUE 7265-PS | 15.98 |
| | 100.00 |

**TABLE 3. White Mill Base**

| **Ingredient** | **Wt%** |
|---|---|
| PHENOXY RESIN, PKHW-35, 32% Solids | 57.22 |
| WATER | 9.23 |
| TAMOL SN DISPERSING AGENT | 0.72 |
| TI-PURE R-900 | 32.83 |
| | 100.00 |

These mill base dispersions may be blended directly with readily available PTFE, PFA or FEP based waterborne dispersions (commercially available from DuPont, Wilmington, Delaware, USA), as shown in Example 3, Table 12. Alternatively, solid powder samples of fluoropolymer may be formulated, but these may require the additional step of re-dispersing these materials from powders in a similar mill base approach as that described above for the color pigments, as shown in Table 4, below. All of the formulations presented in the Examples are low VOC formulations.

**TABLE 4. Solid Fluoropolymer Mill Bases**

| | **Fluoro A** | **Fluoro B** |
|---|---|---|
| **Ingredient** | **Wt%** | **Wt%** |
| PHENOXY RESIN, PKHW-35, 32% Solids | 50.92 | 50.92 |
| WATER | 23.72 | 23.72 |
| Tergitol TMN-6 | 0.83 | 0.83 |
| Diethylene Glycol Mono Butyl Ether | 4.09 | 4.09 |
| **PTFE Micropowder** | **20.44** | |
| **FEP Powder (Spray Dried TE 9071)** | | **20.44** |
| | 100.0 0 | 100.00 |

### Example 1

A blue marine coating was formulated using the Phthalocyanine Blue Mill Base (Table 2) and the PTFE Mill Base (Table 4, Fluoro A) as shown in the formulation in Table 5, below (wet additions). The White Mill Base was blended with the Blue Mill Base, made separately, in order to match the industry required color shade for blue marine coatings.

**TABLE 5. Aqueous Blue One-Coat Formulation for Example 1**

| **Ingredient** | **Wt%** |
|---|---|
| BLUE MILL BASE DISPERSION | 23.94 |
| WHITE MILL BASE DISPERSION | 11.39 |
| WATER | 2.30 |
| Diethylene Glycol Mono Butyl Ether | 0.84 |
| PHENOXY RESIN, PKHW-35, 32% Solids | 22.98 |
| PHENOLIC RESIN, GPRI-4003, 48% Solids | 7.02 |
| PTFE AQUEOUS MILLBASE (Fluoro A) | 20.24 |
| WATER | 8.07 |
| Diethylene Glycol Mono Butyl Ether | 3.23 |
| | 100.00 |

The overall formulation components (including the constituents of the mill base) are shown below (Table 6).

**TABLE 6. Formulation of Example 1 - One-Coat Blue.**

| **Example 1** | | | | |
|---|---|---|---|---|
| **Ingredient** | **Wt % in Wet Formulation** | **Ingredient Solids / %** | **Solids (grams in 100 g)** | **% Solid in dry film** |
| Phenoxy | 55.6 | 31.0 | 17.3 | 53.2 |
| Phenolic | 6.9 | 48.0 | 3.3 | 10.3 |
| PTFE | 4.1 | 100 | 4.1 | 12.6 |
| Blue Pigment | 3.8 | 100 | 3.8 | 11.7 |
| TiO2 | 3.7 | 100 | 3.7 | 11.4 |
| Water | 20.2 | 0 | 0 | 0 |
| Dispersant | 0.3 | 95.0 | 0.3 | 0.9 |
| Surfactant | 0.2 | 10.0 | 0 | 0 |
| Co-solvent | 5.2 | 0 | 0 | 0 |
| | 100.0 | | 32.5 | 100.0 |

Metal panels were then coated with the coating composition and tested for salt spray corrosion resistance as described above. The Blue formulation as seen in Table 5 showed good performance on grit blasted CRS panels (untreated) and better than the comparative commercial coating in ASTM B117 Salt Spray testing (>500 hours). It was then applied on to fasteners (zinc phosphate treated). The coated fasteners were evaluated for salt spray corrosion resistance and Kesternich (SO₂ exposure) testing. The coated fasteners passed the Kesternich test and passed 1,000 hours in the salt spray test (the phosphate treated fasteners started to show rust at 1500 hours in the salt spray corrosion resistance test).

### Example 2 (comparative)

Coating compositions comprising commercial waterborne epoxy resins (EPI-REZ 3546-WH-53, EPI-REZ 3546-WH-53, EPI-REZ 6006-W-68 and EPI-REZ 6520-WH-53) were formulated as follows (Table 7) and the resulting coatings tested for salt spray corrosion resistance (on untreated CRS) as described above.

**TABLE 7. Formulation of One-Coat Epoxy Resin Coatings**

| **Comparative** | | | | |
|---|---|---|---|---|
| **Ingredient** | **Wt % in Wet Formulation** | **Ingredient Solid / %** | **Solids (grams in 100 g)** | **% Solid in dry film** |
| Epoxy resin | 21.5 | 55 | 11.8 | 36.4 |
| Melam ine | 4.4 | 99 | 4.4 | 13.6 |
| PTFE (MP1600) | 15.3 | 100 | 15.3 | 47.2 |
| Black Pigment | 0.9 | 100 | 0.9 | 2.8 |
| Water | 50.2 | 0 | 0 | 0 |
| Surfactant | 0.8 | 0 | 0 | 0 |
| Co-solvent | 6.9 | 0 | 0 | 0 |
| | 100.0 | | 32.4 | 100.0 |

For each of the four epoxy resins, the resulting coatings all failed the salt spray corrosion resistance test, showing greater than 10% red rust after just 56 hours. Similar results were observed when the same waterborne epoxy formulation was used but with the melamine crosslinker substituted with DICY, or adipic dihydrazide, or isophthalic acid dihydrazide (all showed significant rust in less than 100 hours). Commercial solvent-borne epoxy coatings available in the market were also found to be deficient with respect to salt spray corrosion resistance.

### Example 3

An initial aqueous red one-coat formulation, Example 3, used a commercial aqueous fluoropolymer dispersion of FEP, which can be directly blended with the red mill base dispersion and other formulation ingredients, Table 8.

**TABLE 8. Aqueous Red One-Coat Formulation for Example 3**

| **Ingredient** | **Wt%** |
|---|---|
| RED MILL BASE DISPERSION | 34.40 |
| Water | 2.74 |
| Diethylene Glycol Mono Butyl Ether | 1.01 |
| PHENOXY RESIN, PKHW-35, 32% Solids | 13.41 |
| PHENOLIC RESIN, GPRI-4003, 48% Solids | 16.77 |
| **TE-9827 (55% solids FEP Aq. Dispersion)** | **11.43** |
| WATER | 14.45 |
| Diethylene Glycol Mono Butyl Ether | 5.78 |
| | 100.00 |

However, the red marine coating of Example 3 had lower than desired gloss and a slightly lower performance COF than targeted (target COF, both static COF and kinetic COF, is <0.20).

### Example 4

This issue (lower gloss and deficient COF) was resolved by utilizing solid fluoropolymer micropowder, which was formulated by preparing fluoropolymer mill bases based on fluoropolymer powders as shown in Table 4.

An aqueous red marine coating was prepared using the Red Iron Oxide Mill Base and the FEP Mill Base (Table 4, Fluoro B), formulated as shown in Table 9, below.

**TABLE 9. Aqueous Red One-Coat Formulation for Example 4**

| **Ingredient** | **Wt%** |
|---|---|
| RED MILL BASE DISPERSION | 27.67 |
| PHENOXY RESIN, PKHW-35, 32% Solids | 18.25 |
| PHENOLIC RESIN, GPRI-4003, 48% Solids | 13.31 |
| FEP Mill Base (Fluoro B) | 29.36 |
| Water | 8.15 |
| Diethylene Glycol Mono Butyl Ether | 3.26 |
| TOTAL | 100.00 |

The Red Formulation of Example 4 shown in Table 9 resulted in acceptable salt spray corrosion resistance performance (>1,000 hours on untreated CRS and > 1,500 hours on phosphated steel). In further testing, however, it was found to be deficient in solvent resistance (Rig Wash Test). After 24 hrs in the rig wash solution at 70°C the coating softened and could easily be peeled away from the panel (Q-Panels were used as the test substrate). Attempts to provide coatings with sufficient resistance to the rig wash solution by adjusting the cure conditions were unsuccessful. For example, baking at a higher temperature (288°C; 550 deg F) helped a little but not enough to pass this demanding test; moreover, this type of high temperature cure is outside the customer/applicator desire or capability.

### Example 5

Due to the failure of the red formulation of Example 4 in the solvent resistance test, and the inability to adjust cure conditions to resolve the issue, the formulation was further adjusted. An additional small molecule melamine crosslinking agent, Hexakis-(Methoxy Methyl) Melamine (HMMM), was added to the red marine formulation of Example 4, with an offsetting decrease in the phenolic component as shown in Table 10, below.

**TABLE 10. Aqueous Red One-Coat of Example 5**

| **Ingredient** | **Wt%** |
|---|---|
| RED MILL BASE DISPERSION | 28.41 |
| PHENOXY RESIN, PKHW-35, 32% Solids | 22.89 |
| PHENOLIC RESIN, GPRI-4003, 48% Solids | 10.95 |
| PTFE AQUEOUS MILLBASE (Fluoro A) | 30.15 |
| MELAMINE, LUWIPAL 066 (HMMM) | 1.18 |
| WATER | 4.59 |
| ETHYLENE GLYCOL MONOBUTYLETHER | 1.84 |
| | 100.00 |

The overall formulation components (including the constituents of the mill base) are shown below (Table 11).

**Table 11. Formulation of Example 5 - One-Coat Red.**

| **Example 5** | | | | |
|---|---|---|---|---|
| **Ingredient** | **Wt % in liquid** | **Ingredient Solid / %** | **Solids (grams in 100 g)** | **% Solid in dry film** |
| Phenoxy | 53.0 | 31.0 | 16.4 | 41.4 |
| Phenolic | 11.0 | 48.0 | 5.3 | 13.3 |
| Melam ine | 1.2 | 99.0 | 1.2 | 3.0 |
| PTFE | 6.2 | 100 | 6.2 | 15.6 |
| Red Pigment | 10.4 | 100 | 10.4 | 26.3 |
| Water | 14.7 | 0 | 0 | 0 |
| Dispersant | 0.2 | 95.0 | 0.2 | 0.5 |
| Surfactant | 0.3 | 10.0 | 0 | 0 |
| Co-solvent | 3.1 | 0 | 0 | 0 |
| | 100.0 | | 39.7 | 100.0 |

Metal panels were then coated with the coating composition and tested as described above. The adjusted formulation of Example 5 (Table 10) gave an improved coating which now passed the solvent resistance test. Moreover, the formulation of Example 5 also displayed improved salt spray performance, successfully completing 1,000 to 1,500 hours (with less than 5% rust) on CRS directly (untreated), as well as 2,500 hours on phosphated steel panels.

Once the formula of Example 5 passed the salt spray corrosion resistance tests and solvent resistance testthe longer exposure "Weathering" and "Hydraulic Fluid" tests were completed with success. The results are described in "B. SUMMARY OF PROPERTIES AND PERFORMANCE TESTING FOR EXAMPLE 5".

### B. SUMMARY OF PROPERTIES AND PERFORMANCE TESTING FOR EXAMPLE 5

Formulation Example 5 is a low VOC coating formulation. Herein, "low VOC" means low volatile organic content, where low means the level of VOC is below the US less exempt calculation value of 380 grams/liter or 3.20 lb/gal.

The VOC levels for formulation Example 5 are as follows:
VOC US - less exempt is 2.26 lbs/gal (270.33 g/L)
VOC US - as packaged is 1.00 lbs/gal (119.61 g/L)
VOC EU - 2.26 lb/gal (270.33 g/L)

### 1) Coefficient of Friction (COF)

The COF testing protocol follows that of ASTM D1894.
Ex.5 baked at 232°C (450 deg F):
Static COF = 0.176, Kinetic COF = 0.149
Ex.5 baked at 260°C (500 deg F):
Static COF = 0.196, Kinetic COF = 0.170

Coatings from Example 5 showed good lubricity, within the acceptable range for coefficient of friction for a one coat dry lubricant coating.

### 2) Oil Resistance (Exposure to Hydraulic Fluid)

Both un-treated and phosphated Q-Panels were coated with the Red One-Coat Formulation of Example 5 and cured with a bake temperature of 232°C (450 deg F) for 20 minutes metal temperature. The samples were soaked in hydraulic fluid at 60°C for 90 days, during which time the panels were removed at 30, 60 and 90 days and a visual check was made. Aspects of the test A-F were evaluated as follows:
A - Visual examination after 30, 60 and 90 days exposure:
   No change in the appearance of the coating was observed immediately after removal, 2 hours after removal, and thereafter.
B - Thickness measurement:
   Initial Thickness by micrometer = 1.0 mil
   Thickness change = -0.07 mil (liquid phase), -0.1 mil (vapor phase)
C - Adhesion Testing:
   No loss of squares out of the 11 by 11 line 1mm scribed crosshatch pattern (Classification is 5B).
D - MEK Rub test (ASTM D5402):
   No Exposure: Very slight color transfer.
   Vapor Phase and Liquid Phase Exposure: Slight increase in color removal to cloth, no particulates of coating transferred to the cloth.
E - Examination of filtered material (7 micron Filter):
   The filtered hydraulic fluid was compared by XRF (Xray Fluorescence) to virgin hydraulic fluid and the cured coating of Example 5. There was no evidence of coating in the fluid.
F - FTIR examination of filtrate (filtered hydraulic fluid):
   The 7 micron filter from the filtered test hydraulic fluid (100 cc) was compared to a 7 micron filter through which 100 cc of virgin hydraulic fluid was passed, and to an unused 7 micron filter. No difference was observed between these three samples.
   - All aspects of the test (A-F) were passed successfully.

### 3) Salt Spray Corrosion Resistance Test

Salt Spray testing (Test Method ASTM B117) was performed on 2/3 coated phosphated CRS as well as on phosphated and non-phosphated Q-Panels.

The coating of Example 5 successfully completed 1,000 to 1,500 hours of salt spray test on untreated CRS, as well as 2,500 hours on phosphated steel panels. The coatings from Example 5 show exemplary performance in the salt spray corrosion resistance tests.

### 4) Weathering Resistance - UV Exposure (versus competitive product)

The test method used in this test is described per Test SAE J1960 described below in Table 12. Film thickness for the 6 and 12 month simulation samples was evaluated and the film thickness change (loss) for Example 5 was found to be significantly less than for the commercial comparative samples (Tables 13 and 14).

In further studies, it was found that the phenolic resin cross-linker provides some additional weathering resistance for the coating compared to coatings that utilized only the melamine cross-linker. In particular, better weathering resistance and a better overall balance of properties is obtained by using both a melamine crosslinker and a phenolic resin crosslinker.

**Table 12. Test conditions for the UV Exposure Test**

| **Test: SAE J1960** | | | |
|---|---|---|---|
| South Florida Weather Model | | | |
| | | | |
| Equipment: | Atlas Model Ci65 weather-ometer | | |
| Light Source: | Xenon arc | | |
| | | | |

| | **Controls** | **Dark Cycle** | **Light Cycle** |
|---|---|---|---|
| | Automatic/irradiance | NA | 0.55W/m² @ 340nm |
| | Black Panel Temp | 38C | 70C |
| | Welt Bulb Depression | 0C | 12C |
| | Conditioning Water | 40C | 45C |
| | Relative Humidity (except during spray) | 95% | 50% |
| | | | |

| **Light/Dark Cycle** | | | |
|---|---|---|---|
| 120 minutes of Light followed by 60 minutes of dark in the following cycle: | | | |
| **Light:** | 40 min of light followed by 20 minutes of light and front specimen spray, followed by 60 minutes of light | | |
| **Dark** | 60 minutes of dark with rack spray (spraying on back of panel. | | |
| | | | |
| This cycle repeats for specified number of hours. | | | |
| 600 hrs simulates 6 months of exposure | | | |
| 1200 hours simulates 12 months of exposure | | | |

**Table 13. Weight Loss After 6 Month Simulated Weathering Test (450F = 232°C, 500F = 260°C)**

| Sample | Initial DFT | Final DFT | Change in DFT | Average Loss | Average % Loss |
|---|---|---|---|---|---|
| Comp 1, 450F | 0.98 | 0.67 | -0.31 | | |
| Comp 2, 450F | 0.98 | 0.65 | -0.33 | -0.32 | -32.6 |
| | | | | | |
| Ex. 5, 450F | 0.72 | 0.70 | -0.02 | | |
| Ex. 5, 450F | 0.72 | 0.64 | -0.08 | -0.05 | -6.9 |
| | | | | | |
| Ex. 5, 500F | 0.83 | 0.68 | -0.15 | | |
| Ex. 5, 500F | 0.83 | 0.75 | -0.08 | -0.12 | -13.9 |

**Table 14. Weight Loss After 12 Month Simulated Weathering Test (450F = 232°C, 500F = 260°C)**

| Sample | Initial DFT | Final DFT | Change in DFT | Average Loss | Average % Loss |
|---|---|---|---|---|---|
| Comp 1, 450F | 0.98 | 0.55 | -0.43 | | |
| Comp 2, 450F | 0.98 | 0.55 | -0.43 | -0.43 | -43.9 |
| | | | | | |
| Ex. 5, 450F | 0.72 | 0.63 | -0.09 | | |
| Ex. 5, 450F | 0.72 | 0.66 | -0.06 | -0.08 | -10.4 |
| | | | | | |
| Ex. 5, 500F | 0.83 | 0.72 | -0.11 | | |
| Ex. 5, 500F | 0.85 | 0.75 | -0.10 | -0.11 | -12.4 |

### 5) Solvent Resistance Test

Test: Exposure to a typical rig wash product in the form of a 1:5 mixture of "Rig Wash" to water for 24 hours at 70°C. Results: after removal from the test medium, rinsing with water, and then drying, the samples showed no blistering or softening of the coating. Example 5 passes the solvent resistance test.

The results show that good anticorrosion properties, film strength (solvent resistance) and lubricity can be achieved when waterborne phenoxy resin and crosslinking agent are used together with a fluoropolymer in an appropriate ratio and formulation. The coating composition of this invention is particularly suitable for protecting carbon steel, stainless steel and other metal substrates from seawater exposure.

## Claims

1. Process for providing a corrosion-resistant coating on one or more corrodible metal surface, comprising:
i) forming a layer of a waterborne coating composition on said surface, said composition comprising phenoxy resin, crosslinking agent for said resin, fluoropolymer, and a liquid carrier medium;
ii) drying said layer; and
iii) heating said layer to a temperature that causes a crosslinking reaction between said phenoxy resin and said crosslinking agent, wherein the heating step is performed at no greater than 290°C, to obtain as a result thereof said corrosion-resistant coating on said metal surface;
wherein the phenoxy resins are polyhydroxyether polymers having a weight average molecular weight, Mw, greater than 15,000, and having terminal alpha-glycol groups; and wherein the term phenoxy resin includes modified phenoxy resins,
wherein said phenoxy resin is present in said waterborne coating composition in an amount of 40 - 60% by weight of solids based on the total weight of all solid components in said coating composition, and said fluoropolymer is present in said waterborne coating composition in an amount of 10 - 26% by weight of solids based on the total weight of all solid components in said coating composition, and
wherein water comprises at least 70% by weight of said liquid carrier medium based on the total weight of said liquid carrier medium.

2. The process of claim 1 wherein the fluoropolymer has a melting point of greater than 200°C.

3. The process of claim 1 wherein the fluoropolymer has a number average molecular weight, Mn, in the range of from 20,000 to 1,110,000.

4. The process of claim 1, wherein the fluoropolymer is one of: polytetrafluoroethylene, tetrafluoroethylene-hexafluoropropylene copolymer, tetrafluoroethylene-perfluoroalkylvinylether copolymer, ethylene-tetrafluoroethylene copolymer, polyvinyl fluoride, polyvinylidene fluoride, polyhexafluoropropylene, ethylene-hexafluoropropylene copolymer, ethylene-vinyl fluoride copolymer, or any combination thereof.

5. The process of claim 1 wherein the crosslinking agent is a phenolic resin, an amino resin, a multifunctional melamine, an anhydride, dihydrazide, dicyandiamide, isocyanate or blocked isocyanate, or combination thereof.

6. The process of claim 1 wherein said metal surface comprises at least two metal surfaces fastened together, said metal surfaces each having said coating thereon, the lubricity of each said coating enabling said metal surfaces to be separated from one another when unfastened.

7. The process of claim 1 wherein the heating step is performed at a temperature below the melting point of the fluoropolymer.

8. The process of claim 1, additionally comprising step iv) exposing the coating on said corrodible metal surface to a salt water environment.

9. The process of claim 1 wherein the coating is a marine coating on one or more corrodible metal surface and the coating provides salt spray resistance, having less than 10% surface rust, of at least 1,000 hours on untreated steel and at least 2,500 hours on phosphated steel when the thickness of the coating is 25±5 micrometer in accordance with the ASTM B-117 testing condition.

10. The process of claim 1, wherein the Mw of said phenoxy resin is greater than 25,000.

11. The process of claim 1, wherein the Mw of said phenoxy resin is greater than 35,000.

12. The process of claim 1, wherein the Mw of said phenoxy resin is greater than 45,000.

13. The process of claim 1, wherein the Mw of said phenoxy resin is from 25,000 to 100,000.

14. The process of claim 1, wherein the Mw of said phenoxy resin is from 40,000 to 80,000.

15. The process of claim 1, wherein the Mw of said phenoxy resin is from 45,000 to 60,000.

16. An article having a corrodible metal surface provided with a corrosion-resistant coating on said corrodible metal surface by the process of claim 1.

17. A fastener system comprising metal components having corrodible metal surfaces and interposing screw threads, said corrodible metal surfaces provided with a lubricious, corrosion-resistant coating on the corrodible metal surfaces by the process of claim 1.

18. An anticorrosion film consisting essentially of, as a weight percent of solids based on the total weight of solids:
(a) 40-60% by weight of one or more phenoxy resin;
(b) one or more crosslinking agent for said phenoxy resin;
(c) 10-26% by weight of one or more fluoropolymer, and
(d) one or more pigment.

## Patentansprüche

1. Verfahren zum Bereitstellen einer korrosionsbeständigen Beschichtung auf einer oder mehreren korrodierbaren Metalloberflächen, umfassend:
i) Bilden einer Schicht einer Beschichtungszusammensetzung auf Wasserbasis auf der Oberfläche, wobei die Zusammensetzung Phenoxyharz, Vernetzungsmittel für das Harz, Fluorpolymer und ein flüssiges Trägermedium umfasst;
ii) Trocknen der Schicht; und
iii) Erwärmen der Schicht bis zu einer Temperatur, die eine Vernetzungsreaktion zwischen dem Phenoxyharz und dem Vernetzungsmittel hervorruft, wobei der Schritt des Erwärmens bei nicht mehr als 290°C ausgeführt wird, um als Ergebnis davon die korrosionsbeständige Beschichtung auf der Metalloberfläche zu erhalten;
wobei die Phenoxyharze Polyhydroxyether-Polymere sind, die ein Massemittel des Molekulargewichts, Mw, größer als 15.000 aufweist und endständige alpha-Glykol-Gruppen aufweist; und wobei der Begriff Phenoxyharz modifizierte Phenoxyharze einschließt,
wobei das Phenoxyharz in der Beschichtungszusammensetzung auf Wasserbasis in einer Menge von 40% bis 60 Gew.-% von Feststoffen vorliegt, die auf das Gesamtgewicht aller Feststoffkomponenten in der Beschichtungszusammensetzung bezogen sind, und das Fluorpolymer in der Beschichtungszusammensetzung auf Wasserbasis in einer Menge von 10% bis 26 Gew.-% von Feststoffen vorliegt, die auf das Gesamtgewicht aller Feststoffkomponenten in der Beschichtungszusammensetzung bezogen sind, und
wobei Wasser bezogen auf das Gesamtgewicht des flüssigen Trägermediums mindestens 70 Gew.-% des flüssigen Trägermediums umfasst.

2. Verfahren nach Anspruch 1, wobei das Fluorpolymer einen Schmelzpunkt von mehr als 200 °C aufweist.

3. Verfahren nach Anspruch 1, wobei das Fluorpolymer ein Zahlenmittel des Molekulargewichts, Mn, in dem Bereich von 20.000 bis 1.110.000 aufweist.

4. Verfahren nach Anspruch 1, wobei das Fluorpolymer eines der folgenden ist: Polytetrafluorethylen, Tetrafluorethylen-Hexafluorpropylen-Copolymer, Tetrafluorethylen- Perfluoralkylvinylether-Copolymer, Ethylen-Tetrafluorethylen-Copolymer, Polyvinylfluorid, Polyvinylidenfluorid, Polyhexafluorpropylen, Ethylen-Hexafluorpropylen-Copolymer, Ethylen-Vinylfluorid-Copolymer oder eine beliebige Kombination davon.

5. Verfahren nach Anspruch 1, wobei das Vernetzungsmittel ein Phenolharz, ein Aminharz, ein multifunktionales Melamin, ein Anhydrid, Dihydrazid, Dicyandiamid, Isocyanat oder blockiertes Isocyanat oder eine Kombination davon ist.

6. Verfahren nach Anspruch 1, wobei die Metalloberfläche mindestens zwei miteinander befestigte Metalloberflächen umfasst, wobei die Metalloberflächen jeweils die Beschichtung darauf aufweisen, wobei es die Schmierfähigkeit jeder der Beschichtungen ermöglicht, dass die Metalloberflächen voneinander getrennt werden können, wenn sie gelöst werden.

7. Verfahren nach Anspruch 1, wobei der Schritt des Erwärmens bei einer Temperatur unterhalb des Schmelzpunktes des Fluorpolymers ausgeführt wird.

8. Verfahren nach Anspruch 1, zusätzlich umfassend den Schritt iv) Exponieren der Beschichtung auf der korrodierbaren Metalloberfläche an einer Salzwasser-Umgebung.

9. Verfahren nach Anspruch 1, wobei die Beschichtung eine Schiffsbeschichtung auf einer oder mehreren korrodierbaren Metalloberflächen ist und die Beschichtung eine Salzsprühbeständigkeit mit weniger als 10% Oberflächenrost von mindestens 1.000 Stunden auf unbehandeltem Stahl und mindestens 2.500 Stunden auf phosphatiertem Stahl bereitstellt, wenn die Dicke der Beschichtung 25 ± 5 Mikrometer gemäß den Testbedingungen nach ASTM B-117 beträgt.

10. Verfahren nach Anspruch 1, wobei das Mw des Phenoxyharzes größer ist als 25.000.

11. Verfahren nach Anspruch 1, wobei das Mw des Phenoxyharzes größer ist als 35.000.

12. Verfahren nach Anspruch 1, wobei das Mw des Phenoxyharzes größer ist als 45.000.

13. Verfahren nach Anspruch 1, wobei das Mw des Phenoxyharzes von 25.000 bis 100.000 beträgt.

14. Verfahren nach Anspruch 1, wobei das Mw des Phenoxyharzes von 40.000 bis 80.000 beträgt.

15. Verfahren nach Anspruch 1, wobei das Mw des Phenoxyharzes von 45.000 bis 60.000 beträgt.

16. Artikel, aufweisend eine korrodierbare Metalloberfläche, die mit einer korrosionsbeständigen Beschichtung auf der korrodierbaren Metalloberfläche versehen ist, durch das Verfahren nach Anspruch 1.

17. Befestigungssystem, umfassend Metallkomponenten, die korrodierbare Metalloberflächen und dazwischenliegende Schraubgewinde aufweisen, wobei die korrodierbaren Metalloberflächen, durch das Verfahren nach Anspruch 1, mit einer schmierfähigen, korrosionsbeständigen Beschichtung auf den korrodierbaren Metalloberflächen versehen ist.

18. Korrosionsschutzfilm, im Wesentlichen bestehend aus, in Gewichtsprozent von Festoffen, bezogen auf das Gesamtgewicht der Feststoffe:
(a) 40% bis 60 Gew.-% eines oder mehrerer Phenoxyharze;
(b) einem oder mehreren Vernetzungsmitteln für das Phenoxyharz;
(c) 10% bis 26 Gew.-% eines oder mehrerer Fluorpolymere, und
(d) einem oder mehreren Pigmenten.

## Revendications

1. Procédé pour la fourniture d'un revêtement résistant à la corrosion sur une ou plusieurs surfaces métalliques corrodables comprenant:
i) la formation d'une couche d'une composition de revêtement aqueuse sur ladite surface, ladite composition comprenant une résine phénoxy, un agent de réticulation pour ladite résine, un fluoropolymère et un milieu support liquide;
ii) le séchage de ladite couche; et
iii) le chauffage de ladite couche à une température qui entraîne une réaction de réticulation entre ladite résine phénoxy et ledit agent de réticulation, dans lequel ladite étape de chauffage est effectuée à pas plus de 290°C, pour obtenir en conséquence de celle-ci ledit revêtement résistant à la corrosion sur ladite surface métallique;
dans lequel les résines phénoxy sont des polymères de polyhydroxyéther ayant un poids moléculaire moyen en poids, Mw, supérieur à 15.000 et possédant des groupes terminaux d'alpha-glycol; et dans lequel le terme résine phénoxy inclut des résines phénoxy modifiées,
dans lequel ladite résine phénoxy est présente dans ladite composition de revêtement aqueuse dans une quantité de 40-60 % en poids de solides sur la base du poids total de tous les composants solides dans ladite composition de revêtement et ledit fluoropolymère est présent dans ladite composition de revêtement aqueuse dans une quantité de 10-26 % en poids de solides sur la base du poids total de tous les composants solides dans ladite composition de revêtement, et
dans lequel l'eau comprend au moins 70 % en poids dudit milieu support solide sur la base du poids total dudit milieu support liquide.

2. Procédé selon la revendication 1, dans lequel le fluoropolymère a un point de fusion supérieur à 200°C.

3. Procédé selon la revendication 1, dans lequel le fluoropolymère a un poids moléculaire moyen en nombre, Mn, dans l'intervalle de 20.000 à 1.110.000.

4. Procédé selon la revendication 1, dans lequel le fluoropolymère est un parmi: polytétrafluoroéthylène, copolymère de tétrafluoroéthylène-hexafluoropropylène, copolymère de tétrafluoroéthylène-perfluoroalkylvinyléther, copolymère d'éthylène-tétrafluoroéthylène, fluorure de polyvinyle, fluorure de polyvinylidène, polyhexafluoropropylène, copolymère d'éthylène-hexafluoropropylène, copolymère d'éthylène-fluorure de vinyle ou toute combinaison de ceux-ci.

5. Procédé selon la revendication 1, dans lequel l'agent de réticulation est une résine phénolique, une résine amino, une mélamine multifonctionnelle, un anhydride, un dihydrazide, un dicyandiamide, un isocyanate ou un isocyanate bloqué ou une combinaison de ceux-ci.

6. Procédé selon la revendication 1, dans lequel ladite surface métallique comprend au moins deux surfaces métalliques collées ensemble, lesdites surfaces métalliques ayant chacune ledit revêtement sur celles-ci, le pouvoir lubrifiant de chacun desdits revêtements permettant auxdites surfaces métalliques d'être séparés l'une de l'autre lorsqu'elles sont décollées.

7. Procédé selon la revendication 1, dans lequel l'étape de chauffage est effectuée à une température en dessous du point de fusion du fluoropolymère.

8. Procédé selon la revendication 1, comprenant en outre l'étape iv) exposition du revêtement sur ladite surface métallique corrodable à un environnement d'eau salée.

9. Procédé selon la revendication 1, dans lequel le revêtement est un revêtement marin sur une ou plusieurs surfaces métalliques corrodables et le revêtement confère une résistance à une pulvérisation de sel, ayant moins de 10% de rouille en surface, d'au moins 1.000 heures sur un acier non traité et d'au moins 2.500 heures sur un acier phosphaté lorsque l'épaisseur du revêtement est de 25 ± 5 micromètres conformément à la condition d'essai ASTM B-117.

10. Procédé selon la revendication 1, dans lequel le Mw de ladite résine phénoxy est supérieur à 25.000.

11. Procédé selon la revendication 1, dans lequel le Mw de ladite résine phénoxy est supérieur à 35.000.

12. Procédé selon la revendication 1, dans lequel le Mw de ladite résine phénoxy est supérieur à 45.000.

13. Procédé selon la revendication 1, dans lequel le Mw de ladite résine phénoxy est de 25.000 à 100.000.

14. Procédé selon la revendication 1, dans lequel le Mw de ladite résine phénoxy est de 40.000 à 80.000.

15. Procédé selon la revendication 1, dans lequel le Mw de ladite résine phénoxy est de 45.000 à 60.000.

16. Article possédant une surface métallique corrodable pourvue d'un revêtement résistant à la corrosion sur ladite surface métallique corrodable par le procédé selon la revendication 1.

17. Système de fixation comprenant des composants métalliques ayant des surfaces métalliques corrodables et des filets de vis s'interposant, lesdites surfaces métalliques corrodables étant pourvues d'un revêtement lubrifiant résistant à la corrosion sur les surfaces métalliques corrodables par le procédé selon la revendication 1.

18. Film anticorrosion constitué essentiellement de, en pourcentage en poids de solides sur la base du poids total de solides :
(a) 40-60 % en poids d'une ou de plusieurs résines phénoxy ;
(b) un ou plusieurs agents de réticulation pour ladite résine phénoxy;
(c) 10-26 % en poids d'un ou de plusieurs fluoropolymères ; et
(d) un ou plusieurs pigments.
